# EUROPEAN PATENT APPLICATION

(11) **EP 4 434 723 A1**
(43) Date of publication of application: **25.09.2024**
(21) Application number: 24164812.0
(22) Date of filing: 20.03.2024
(51) Int. Cl.: B29C 53/28, B29C 70/50, B29C 70/46, B29C 65/02, B29D 99/00

(54) **METHODS AND APPARATUSES FOR FORMING CORRUGATED THERMOPLASTIC SHEETS AND CELLULAR STRUCTURES**

(30) Priority: 21.03.2023 US 202318124097
(71) Applicant: Spirit AeroSystems, Inc., Wichita, KS 67278 (US)
(72) Inventor: GARBER, Joseph, Wichita, 67278 (US); WADSWORTH, Mark Anthony, Wichita, 67278 (US); BLONIGEN, Bradley John, Wichita, 67278 (US)
(74) Representative: HGF

(57) **Abstract**

A method of forming a corrugated thermoplastic matrix composite sheet includes preheating a thermoplastic matrix composite sheet (20) including a thermoplastic matrix and a reinforcement material to at least about a melting temperature of the thermoplastic matrix; preheating at least one of a pair of complementary corrugating tools (32,34) to at least about a glass transition temperature of the thermoplastic matrix; compressing the preheated thermoplastic matrix composite sheet between the pair of complementary corrugating tools (32,34) to form a corrugation in the thermoplastic matrix composite sheet; and holding the corrugation between the pair of complementary corrugating tools (32,34) until a portion of the thermoplastic matrix composite sheet having the corrugation is below the melting temperature of the thermoplastic matrix to form the corrugated thermoplastic matrix composite sheet (10).

## Description

### BACKGROUND

Honeycomb cores are made of composite material or metals and are often used in the construction of aircraft parts. For example, honeycomb cores are used to make acoustic panels in a nacelle for attenuating engine noise. Honeycomb cores are sandwiched between pairs of skins and attached to the skins adhesives and/or fasteners. However, these types of securement methods can be inconsistent in terms of rate, strength, and weight.

The background discussion is intended to provide information related to the present invention which is not necessarily prior art.

### SUMMARY

In some embodiments, a method of forming a corrugated thermoplastic matrix composite sheet includes preheating a thermoplastic matrix composite sheet including a thermoplastic matrix and a reinforcement material to at least about a melting temperature of the thermoplastic matrix; preheating at least one of a pair of complementary corrugating tools to at least about a glass transition temperature of the thermoplastic matrix; compressing the preheated thermoplastic matrix composite sheet between the pair of complementary corrugating tools to form a corrugation in the thermoplastic matrix composite sheet; and holding the corrugation between the pair of complementary corrugating tools until a portion of the thermoplastic matrix composite sheet having the corrugation is below the melting temperature of the thermoplastic matrix to form the corrugated thermoplastic matrix composite sheet.

In another embodiment, an apparatus for forming a corrugated thermoplastic sheet. The corrugated thermoplastic sheet is formed from a sheet of thermoplastic with reinforcement material embedded therein. The apparatus includes a first heating element, a first corrugating tool, a second corrugating tool, and a second heating element. The first heating element is configured to heat a portion of the sheet to at least about a melting temperature of the thermoplastic. The first corrugating tool has a male mold for imparting a trough in the sheet. The second corrugating tool has a complementary female mold that receives the male mold. The second heating element is configured to heat the male mold or the female mold to at least about a glass transition temperature of the thermoplastic.

In yet another embodiment, an apparatus for forming a corrugated thermoplastic sheet includes a first continuous track assembly, and a second continuous track assembly. The first continuous track assembly includes a belt with a first set of cleats for engaging a first side of a portion of a thermoplastic sheet. The second continuous track assembly includes a belt with a second set of cleats that are complementary to the first set of cleats for engaging a second side of the portion of the thermoplastic sheet. The second side being opposite to the first side of the thermoplastic sheet.

In some embodiments, a method of forming a thermoplastic cellular structure includes positioning a lower surface of a trough of a first corrugated thermoplastic sheet against an upper surface of a crest of a second corrugated thermoplastic sheet; positioning a support against a lower surface of the crest of the second corrugated thermoplastic sheet; and pressing a thermoplastic welding element against an upper surface of the trough of the first corrugated thermoplastic sheet so that at least a portion of the lower surface of the trough of the first corrugated thermoplastic sheet melts and bonds to at least a portion of the upper surface of the crest of the second corrugated thermoplastic sheet.

In another embodiment, an apparatus for forming a thermoplastic cellular structure includes elongated supports and thermoplastic welding elements. The elongated supports extend parallel to one another and have coplanar top surfaces. The thermoplastic welding elements are operable to melt thermoplastic and have coplanar bottom surfaces that face the top surfaces of the elongated supports.

In yet another embodiment, a method of forming a thermoplastic cellular structure includes positioning a lower surface of a trough of a first corrugated thermoplastic sheet next to an upper surface of a crest of a second corrugated thermoplastic sheet; pressing the lower surface of the trough of the first corrugated thermoplastic sheet against the upper surface of the crest of the second corrugated thermoplastic sheet; and heating a portion of the trough of the first corrugated thermoplastic sheet so that at least a portion of the lower surface of the trough of the first corrugated thermoplastic sheet melts and bonds to at least a portion of the upper surface of the crest of the second corrugated thermoplastic sheet.

This summary is provided to introduce a selection of concepts in a simplified form that are further described below in the detailed description. This summary is not intended to identify key features or essential features of the claimed subject matter, nor is it intended to be used to limit the scope of the claimed subject matter. Other aspects and advantages of the present invention will be apparent from the following detailed description of the embodiments and the accompanying drawing figures.

### BRIEF DESCRIPTION OF THE DRAWINGS

Embodiments of the present invention are described in detail below with reference to the attached drawing figures, wherein:
FIG. 1 is a perspective view of a corrugated thermoplastic sheet, a stack of corrugated thermoplastic sheets, and a cellular structure formed from the sheets according to embodiments of the present invention;
FIG. 2 is a schematic cross-sectional side view of an apparatus for forming a corrugated thermoplastic sheet according to an embodiment of the present invention;
FIG. 3 is a schematic cross-sectional side view of an apparatus for forming a corrugated thermoplastic sheet according to another embodiment of the present invention;
FIG. 4A is a cross-sectional side view of the apparatus of FIG. 3 with a heating element heating a thermoplastic sheet;
FIG. 4B is a cross-sectional side view of the apparatus of FIG. 3 with a first portion of an upper tool forming a first corrugation in the thermoplastic sheet;
FIG. 4C is cross-sectional side view of the apparatus of FIG. 3 with a second portion of the upper tool forming a second corrugation in the thermoplastic sheet;
FIG. 4D is cross-sectional side view of the apparatus of FIG. 3 with a third portion of the upper tool forming a third corrugation in the thermoplastic sheet;
FIG. 4E is cross-sectional side view of the apparatus of FIG. 3 with a fourth portion of the upper tool forming a fourth corrugation in the thermoplastic sheet;
FIG. 4F is cross-sectional side view of the apparatus of FIG. 3 with the corrugated thermoplastic sheet formed;
FIG. 5 is a perspective view of an apparatus for forming a cellular structure according to an embodiment of the present invention;
FIG. 6 is a perspective view of a support device of the apparatus of FIG. 5;
FIG. 7A is a cross-sectional side view of the apparatus of FIG. 5 with two corrugated thermoplastic sheets positioned therein;
FIG. 7B is a cross-sectional side view of the apparatus of FIG. 5 with the two corrugated thermoplastic sheets being welded together;
FIG. 7C is a cross-sectional side view of the apparatus of FIG. 5 with a third corrugated thermoplastic sheet positioned above the welded sheets;
FIG. 7D is a cross-sectional side view of the apparatus of FIG. 5 with a fourth corrugated thermoplastic sheet positioned above the welded third sheet;
FIG. 7E is a cross-sectional side view of the apparatus of FIG. 5 with a fifth corrugated thermoplastic sheet positioned above the previously-welded sheets;
FIG. 7F is a cross-sectional side view of the apparatus of FIG. 5 with a sixth corrugated thermoplastic sheet positioned above the previously-welded sheets;
FIG. 7G is a cross-sectional side view of the apparatus of FIG. 5 with a seventh corrugated thermoplastic sheet positioned above the previously-welded sheets;
FIG. 8 is a flow chart of a method for forming a corrugated thermoplastic sheet in accordance with embodiments of the present invention; and
FIG. 9 is a flow chart of a method for forming a thermoplastic cellular structure in accordance with embodiments of the present invention.

The drawing figures do not limit the present invention to the specific embodiments disclosed and described herein. The drawings are not necessarily to scale, emphasis instead being placed upon clearly illustrating the principles of the invention.

### DETAILED DESCRIPTION

The following detailed description of the invention references the accompanying drawings that illustrate specific embodiments in which the invention can be practiced. The embodiments are intended to describe aspects of the invention in sufficient detail to enable those skilled in the art to practice the invention. Other embodiments can be utilized and changes can be made without departing from the scope of the present invention. The following detailed description is, therefore, not to be taken in a limiting sense. The scope of the present invention is defined only by the appended claims, along with the full scope of equivalents to which such claims are entitled.

In this description, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments, but is not necessarily included. Thus, the present technology can include a variety of combinations and/or integrations of the embodiments described herein.

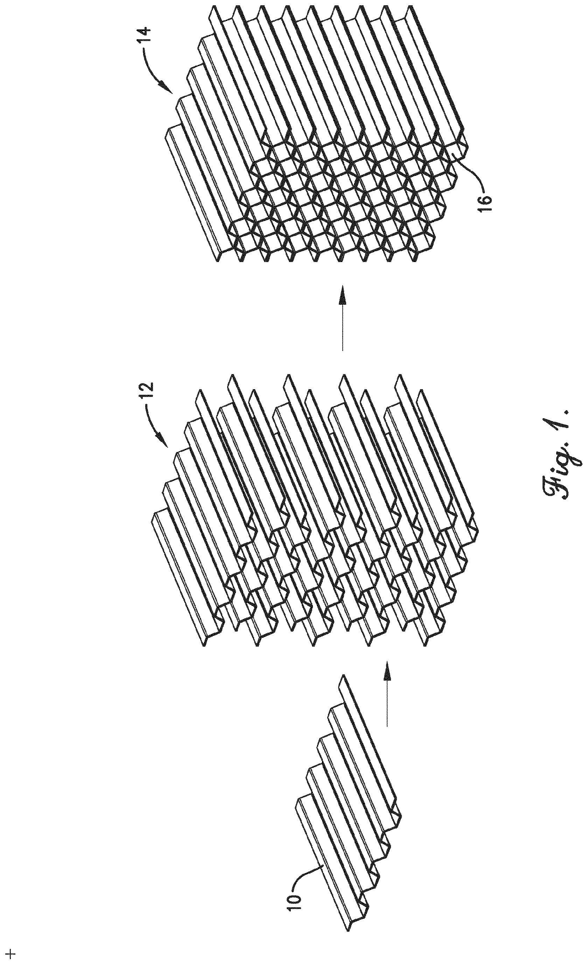

Turning to FIG. 1, a corrugated sheet 10 constructed according to an embodiment is depicted. The corrugated sheet 10 comprises thermoplastic and a reinforcement material. The thermoplastic includes any type of thermoplastic, depending on the application. In embodiments, the thermoplastic includes polyetheretherketone (PEEK), polyaryletherketone (PAEK), or polyetherketoneketone (PEKK). However, embodiments of the invention include thermoplastics having varying processing temperatures and performance capabilities. The reinforcement material includes continuous fiber, such as glass fiber, carbon fiber, boron fiber, aramid fiber, or ceramic fiber. Multiple corrugated sheets may be positioned with their troughs and crests (discussed in further detail below) facing one another to form a stack 12.

Embodiments of the invention include methods and apparatuses for welding the sheets 10 of the stack 12 to form a cellular structure 14. The cellular structure 14 defines cells 16 having any number of shapes without departing from the scope of the invention. In embodiments, the cellular structure 14 is a honeycomb with hexagonal columnar cells 16, as depicted in FIG. 1. In some embodiments, the sheets 10 form sinusoidal waves to define ogee- shaped cells, square waves to define rectangular cells, or the like. The widths of the cells 16 vary depending upon the application. In embodiments, the widths of the cells 16 are 3.18 millimeters (about an eighth of an inch) to about 6.35 millimeters (about a quarter of an inch). In some embodiments, the widths of the cells 16 are about 304.8 millimeters (about a foot wide).

The cellular structure 14 is advantageously welded to thermoplastic skins. This enables the use of thermoplastics in structures that require sandwich panels with structurally sound bonds without the use of mechanical fasteners or adhesives. The cellular structure 14 can be implemented in any number of applications, such as in automotive structures, wind turbine structures, structural/architectural components for construction projects, sporting goods, and other applications.

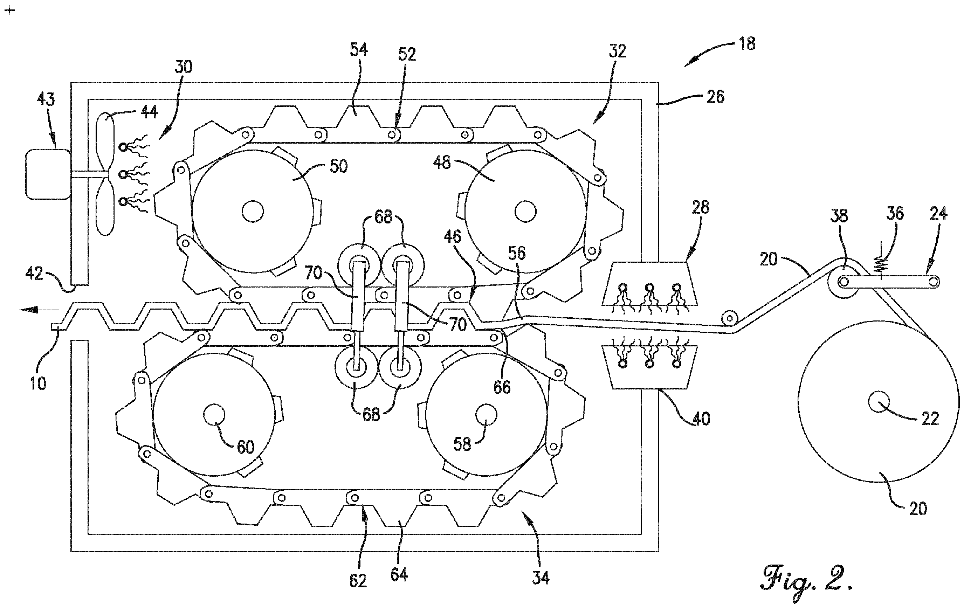

Turning to FIG. 2, an apparatus 18 constructed according to an embodiment of the invention is depicted. The apparatus 18 is operable to form corrugated sheets 10 from reinforced thermoplastic material 20. The thermoplastic material 20 is any of the thermoplastic materials discussed above, including reinforced thermoplastic. The apparatus 18 includes a mobile support 22 for supporting a roll of thermoplastic material 20, a tensioning device 24, a housing or oven 26, a first heating element 28, a second heating element 30, and a pair of complementary corrugating tools 32, 34.

The mobile support 22 holds the roll of thermoplastic 20 and is spaced apart from the corrugating tools 32, 34. The mobile support 22 is an axle or bearing that allows the roll of thermoplastics 20 to unroll so that the thermoplastic shifts toward, unfurls, or moves towards the corrugating tools 32, 34 when the corrugations are being formed. In embodiments the thermoplastic is reinforced with continuous fiber, such as carbon fiber, the sheet 10 does not stretch well. Thus, the thermoplastic 20 needs to be able to shift toward the tools 32, 34 as the corrugations are formed. In other words, the corrugations are formed by folding additional material, not stretching the material. This is advantageous for application requiring high levels of control over the thickness of the cellular structure 14 and necessary when the sheet is reinforced with continuous fiber. Embodiments of the invention include other types of mobile supports, including mobile clamps, as discussed elsewhere herein.

The tensioning device 24 provides tension to the thermoplastic sheet 20. The tensioning device 24 comprises a biasing element 36 secured to a dancer pulley 38 that maintains constant tension as the material 20 is pulled into the corrugating tools 32, 34.

The oven 26 houses the heating elements 28, 30 and the corrugating tools 32, 34 and helps control the temperature around the thermoplastic sheet and the processing area. The oven 26 includes an inlet 40 through which the thermoplastic sheet 20 is received and an outlet 42 through which the formed corrugated sheet 10 exits.

The first heating element 28 is configured to heat a portion of the sheet 20 to at least about a melting temperature of the thermoplastic 20. The melting temperature is different for different types of thermoplastics. In embodiments, the first heating element 28 is configured to heat the thermoplastic 20 up to eight hundred degrees Fahrenheit (800 °F). As used herein, "at least about the melting temperature" is ninety-five percent (95%) of the actual melting temperature of the thermoplastic material or higher. The first heating element 28 is supported on the oven 26 at the inlet 40 thereof. In some embodiments, the first heating element 28 includes infrared lamp heaters, hot gas/hot air heaters, or high-powered lasers.

The second heating element 30 is configured to heat at least one of the molding surfaces of the corrugating tools 32, 34. The tools 32, 34 are heated so that the corrugated thermoplastic sheet 10 is cooled in a controlled manner. In embodiments, the second heating element 30 is configured to heat the molding surfaces of the corrugating tools 32, 34 to at least about a glass transition temperature of the thermoplastic. As used herein, "at least about the glass transition temperature" is ninety percent (90%) of the actual glass transition temperature of the thermoplastic material or higher. In embodiments, the second heating element 30 is configured to heat the molding surfaces of the corrugating tools 32, 34 to at least about a glass transition temperature of the thermoplastic up to 95% of the melting temperature of the thermoplastic material. In embodiments, the second heating element 30 is configured to heat the thermoplastic material to about halfway through the glass transition temperature of the thermoplastic material and the melting temperature of the thermoplastic material. In embodiments, the second heating element 30 includes a motor 43 outside the interior of the oven 26 that drives a fan 44 for blowing heated air onto the corrugating tool 32. In some embodiments, the apparatus 18 includes multiple heating elements configured to heat both corrugating tools 32, 34.

The first corrugating tool 32-cooperatively with the second corrugating tool 34-forms a corrugation 46 in the sheet 20. The first corrugating tool 32 comprises a continuous track assembly having a pair of pulleys 48, 50 spaced apart from one another and a belt or linked chain 52 comprising a plurality of cleats 54. One or more of the pulleys 48, 50 drive the belt 52 so that the belt 52 shifts about the pulleys 48, 50. In some embodiments, a motor (not shown) drives at least one of the pulleys 48, 50. The cleats 54 engage a first side 56 of the thermoplastic material 20. The cleats 54 have any number of different shapes, depending on the desired shape of the cells of the cellular structure.

The second corrugating tool 34 is complementary to the first corrugating tool 32. The second corrugating tool 34 comprises a continuous track assembly having a pair of pulleys 58, 60 spaced apart from one another and a belt or linked chain 62 comprising a plurality of cleats 64. One or more of the pulleys 58, 60 drive the belt 62 so that it shifts about the pulleys 58, 60. In some embodiments, a motor drives at least one of the pulleys 58, 60. In some embodiments, the motor that drives the pulleys 48, 50 also drives pulleys 58, 60 through one or more belts or gears so that the pulleys operate synchronously. The cleats 64 engage a second side 66 of the thermoplastic material 20 and are complementary to the cleats 54 of the first corrugating tool 32. The cleats 54, 64 may be complementary due to their relative orientation about their respective pulleys and/or due to the positions of the pulleys (as depicted). The cleats 64 have any number of different shapes, depending on the desired shape of the cells of the cellular structure.

The corrugating tools 32, 34 hold the corrugations 46 in the cleats 54, 64 until the portion of the sheet 20 having the corrugation 46 is below the melting temperature of the thermoplastic. In embodiments, this is accomplished due to the cleats 54, 64 forming and engaging the corrugation 46 and pulling or shifting the corrugation 46 as their respective belts shift about their respective pulleys. The pulleys are spaced apart at long enough distances so that the cleats 54, 64 hold the corrugation 46 for a necessary distance at an operating speed so that the thermoplastic 20 of the corrugation 46 cools below the melting temperature of the thermoplastic. In some embodiments, the distance is long enough so that the thermoplastic 20 of the corrugation 46 cools to the glass transition temperature of the thermoplastic. In embodiments, the distance the corrugation 46 travels is at least twice as long as the length of the sheet required to form the corrugation 46. In embodiments, the apparatus 18 includes idler rollers 68 and biasing members 70 that apply constant pressure to the belts 52 to maintain a pressure on the corrugated sheet 10 as the cleats 54, 64 hold the corrugation 46. In embodiments, the biasing members 70 include actuators or hydraulic cylinders. The cleats 54, 64 disengage from the formed corrugation 46 at the end of the forming distance, and the portion of the sheet 10 having the corrugation 46 is pushed out of the outlet 42 of the oven 26.

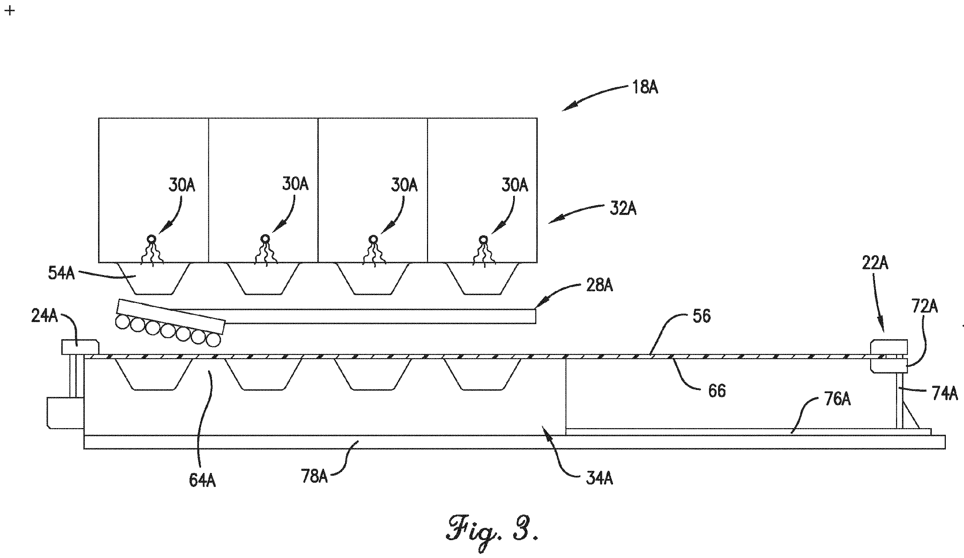

An apparatus 18A constructed in accordance with another embodiment of the invention is shown in FIG. 3. The apparatus 18A comprises some similar components as apparatus 18; thus, the components of apparatus 18A that correspond to similar components in apparatus 18 have an 'A' appended to their reference numerals.

The apparatus 18A is operable to form corrugated sheets 10 from thermoplastic material 20. The thermoplastic material 20 is any of the thermoplastic materials discussed above, including reinforced thermoplastic material. The apparatus 18A includes a mobile support 22A for supporting the thermoplastic sheet 20, an end clamp 24A, a first heating element 28A, second heating elements 30A, and a pair of complementary corrugating tools 32A, 34A.

The mobile support 22A holds a portion of the sheet 20 not being formed and is spaced apart from the corrugating tools 32A, 34A. The support 22A is configured to shift toward the corrugating tools 32A, 34A so that the portion of the sheet 20 not being formed shifts toward the corrugating tools 32A, 34A when the sheet is compressed. In embodiments, the support 22A includes a clamp 72A, a mobile chassis 74A, and a track 76A. The other end of the sheet 20 is secured via the fixed end clamp 24A. Every time the sheet 20 is bent to form a corrugation, the rest of the sheet and the support 22A are pulled towards the corrugating tools 32A, 34A.

The first heating element 28A is configured to heat a portion of the sheet 20 to at least about a melting temperature of the thermoplastic 20. The first heating element 28A is a mobile heater that is operable to extend between the tools 32A, 34A and retract out from between the tools 32A, 34A. The melting temperature is different for different types of thermoplastics. In embodiments, the first heating element 28A is configured to heat the thermoplastic 20 up to eight hundred degrees Fahrenheit (800 °F). In some embodiments, the first heating element 28A includes infrared lamp heaters, hot gas/hot air heaters, or high- powered lasers.

The second heating elements 30A are configured to heat at least one of the molding surfaces of the corrugating tool 32A. The heating elements 30A comprise heated blocks or platens having any number of heat sources, including electric heaters, infrared heaters, or induction heaters. As discussed above, the tool 32A is heated so that the corrugated thermoplastic sheet 10 is cooled in a controlled manner. In embodiments, the second heating elements 30A are configured to heat the molding surfaces of the corrugating tool 32A to at least about a glass transition temperature of the thermoplastic. In embodiments, the second heating elements 30A are configured to heat the molding surfaces of the corrugating tool 32A to at least about a glass transition temperature of the thermoplastic up to and including the melting temperature of the thermoplastic material. In embodiments, the second heating elements 30A are configured to heat the tools 32A so that the thermoplastic material is cooled in a controlled manner to about halfway through the glass transition temperature of the thermoplastic material and the melting temperature of the thermoplastic material.

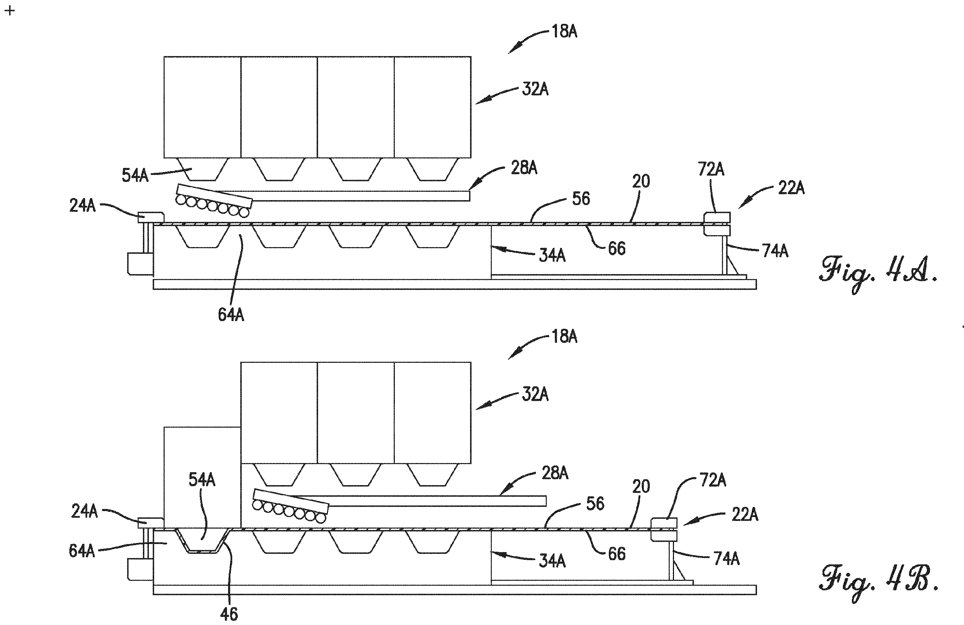

The first corrugating tool 32A includes a plurality of individually shiftable cleats 54A that each form a corrugation in the sheet 20. The cleats 54A engage a first side 56 of the thermoplastic material 20 to form the corrugation 46 (depicted in FIGS. 4B-4F). The cleats 54A have any number of different shapes, depending on the desired shape of the cells of the cellular structure. The second corrugating tool 34A comprises cleats 64A that are complementary to-and operable to receive-the cleats 54A. The second corrugating tool 34A is positioned on a press base 78A. The cleats 64A engage the second side 66 of the sheet 20 when the opposing cleats 54A push against the first side 56 of the sheet 20. The corrugating tools 32A, 34A include any number of cleats 54A, 64A without departing from the scope of the invention. Further, any portion or the entirety of the corrugating tool 34A can be actuated toward tool 32A without departing from the scope of the present invention.

Turning to FIG. 4A, the first heating element 28A is positioned between the tools 32A, 34A to heat the thermoplastic sheet 20. The first heating element 28A heats the portion of the sheet 20 that is between a first cleat 54A and corresponding cleats 64A. Turning to FIG. 4B, a first cleat 54A is actuated toward the second tool 34A. The first cleat 54A engages the first side 56 of the sheet 20 and extends into a space defined by adjacent bottom tool cleats 64A. The adjacent cleats 64A engage the second side 66 of the sheet 20. The cleats 54A, 64A form a first corrugation 46 in the sheet 20. As the cleat 54A engages the sheet 20, the tension of the sheet causes the clamp 72A and chassis 74A to shift toward the tools 32A, 34A. While the first corrugation 46 is formed, the heater 28A heats the portion of the sheet 20 where a second corrugation is to be formed.

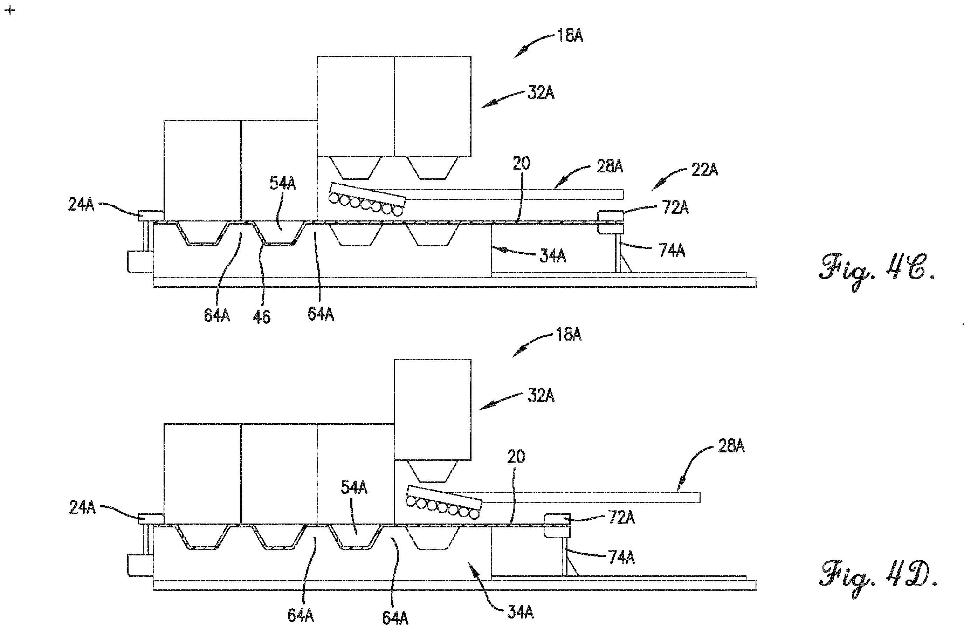

Turning to FIG. 4C, a second cleat 54A is actuated toward the second tool 34A. The second cleat 54A and adjacent cleats 64A engage the sheet 20 to form a second corrugation 46 in the sheet 20, and the clamp 72A and chassis 74A shift toward the tools 32A, 34A. Meanwhile, the heater 28A heats the portion of the sheet 20 where another corrugation is to be formed.

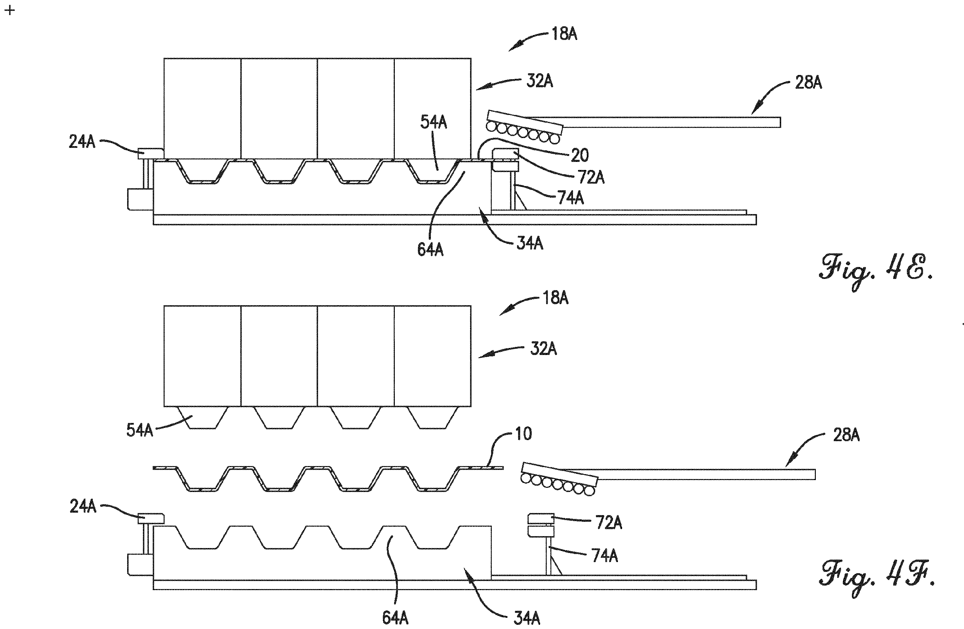

Turning to FIG. 4D, another cleat 54A is actuated toward the second tool 34A. The second cleat 54A and adjacent cleats 64A engage the sheet 20 to form another corrugation 46 in the sheet 20, and the clamp 72A and chassis 74A shift toward the tools 32A, 34A. Meanwhile, the heater 28A heats the portion of the sheet 20 where another corrugation is to be formed. Turning to FIG. 4E, the aforementioned operations are repeated until all the cleats 54A of the tool 32A have engaged the sheet 20. The tools 32A, 34A hold the corrugations 46 until the portions of the sheet 20 having the corrugations are below the melting temperature of the thermoplastic to form the corrugated thermoplastic sheet 10, as depicted in FIG. 4F.

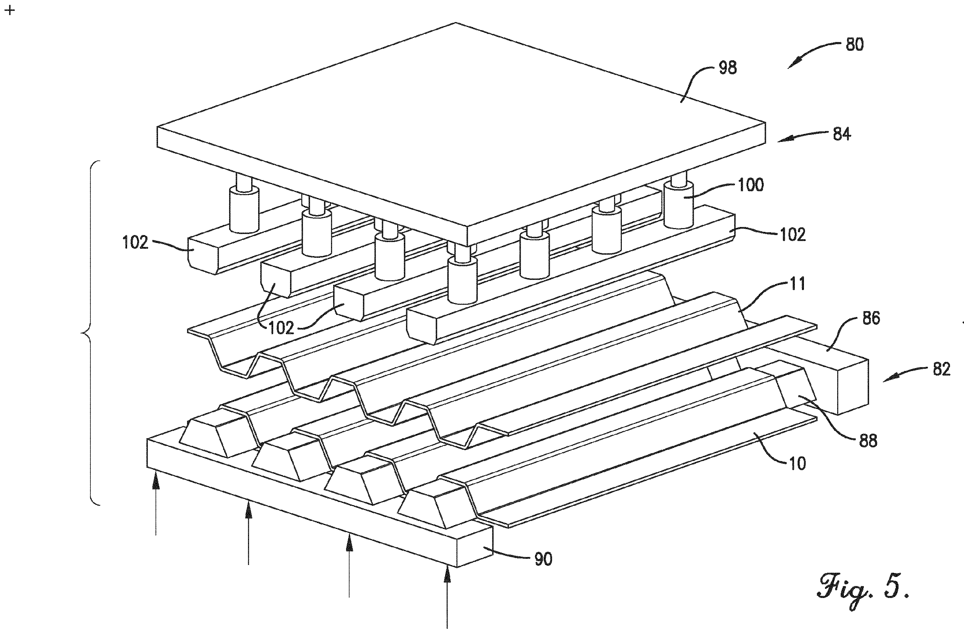

An apparatus 80 constructed in accordance with another embodiment of the invention is shown in FIG. 5. The apparatus 80 is operable to form a cellular structure 14 (depicted in FIG. 1) from corrugated reinforced thermoplastic sheets 10, 11 and comprises a support structure 82 and a welding tool 84.

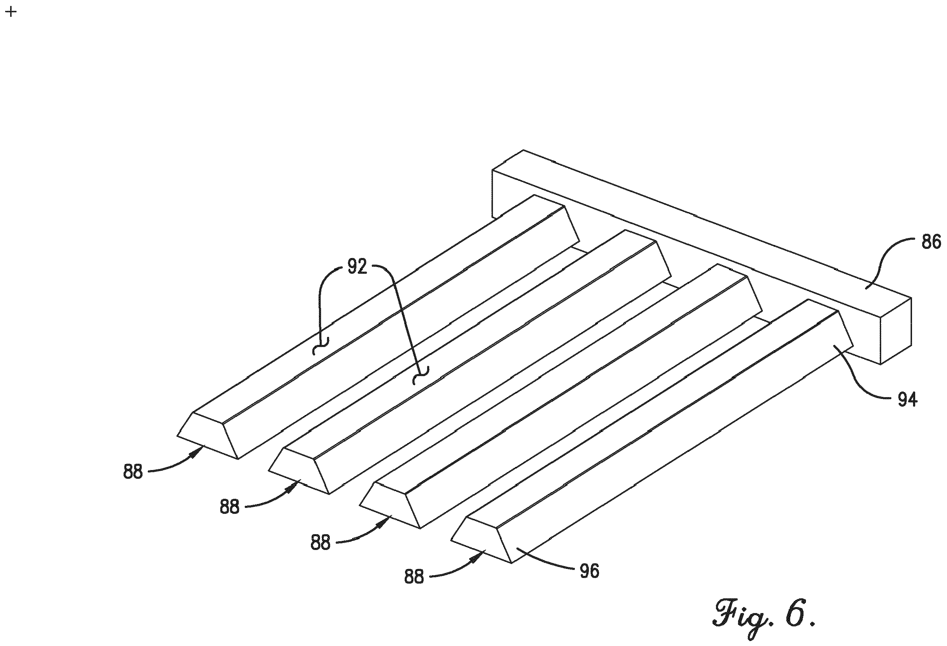

The support structure 82 comprises a first tool support 86, elongated supports 88, and a second tool support 90. The elongated supports 88 extend from the first tool support 86 and are operable to extend into or be inserted into spaces defined by the crests of the sheets 10, 11. Turning to FIG. 6, the elongated supports 88 extend generally parallel to one another and have substantially coplanar top surfaces 92. The contour of the top surfaces 92 generally match the bottom surfaces of the crests of the corrugated sheets 10. In embodiments, the top surfaces 92 are parallel to bottom surfaces of the crests of the corrugated thermoplastic sheets 10. First ends 94 of the elongated supports 88 are secured to the first tool support 86, and the other ends 96 extend past the sheets 10 and are supported by the second tool support 90 (as depicted in FIG. 5) when the welding tool 84 presses against the sheets 11, as discussed in further detail below. In embodiments, the supports 88 comprise metal, steel, aluminum, or any material that can withstand high temperatures and are rigid. In embodiments, the supports 88 are I-beam shaped, U-shaped, or rectilinear. The second support tool 90 is vertically shiftable relative to the sheets 10 to support the elongated supports 88 at any vertical location relative to the sheets 10.

Turning back to FIG. 5, the welding tool comprises a press platen 98, a plurality of stanchions 100 connected to the platen 98, and a plurality of thermoplastic welding elements 102 secured to the stanchions. The press platen 98 is operable to be actuated towards the supports 88 to weld sheets and away from the supports 88 in order to load additional corrugated sheets.

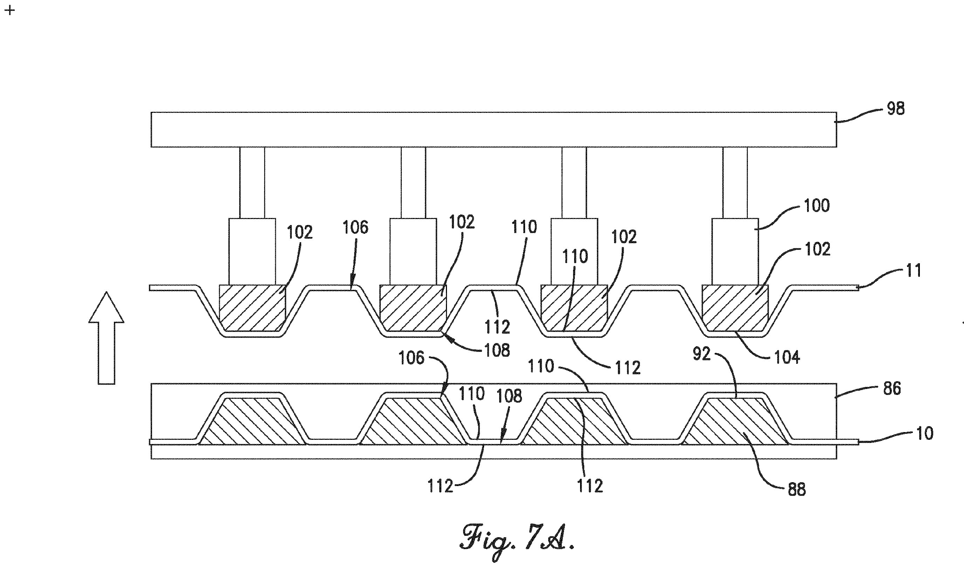

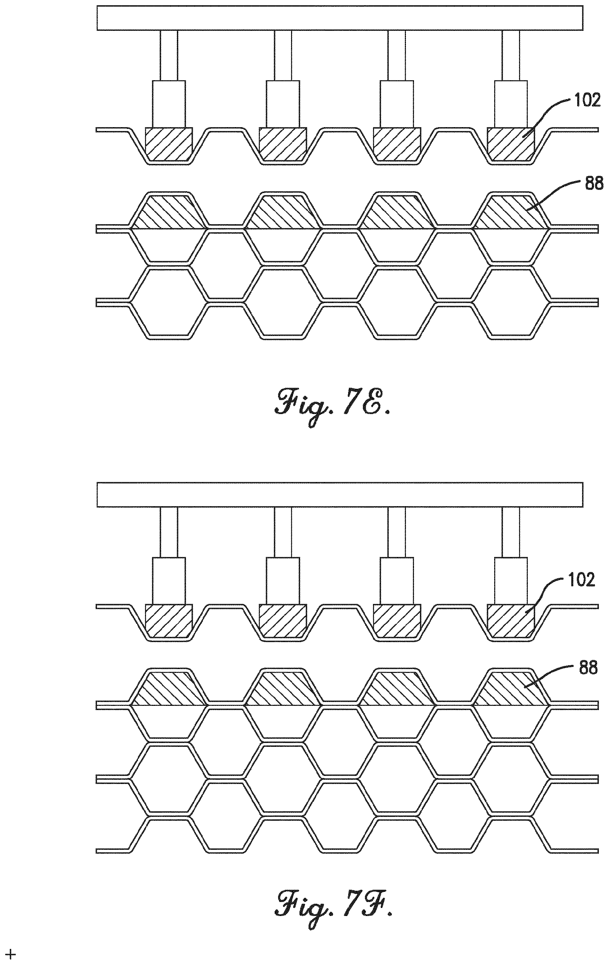

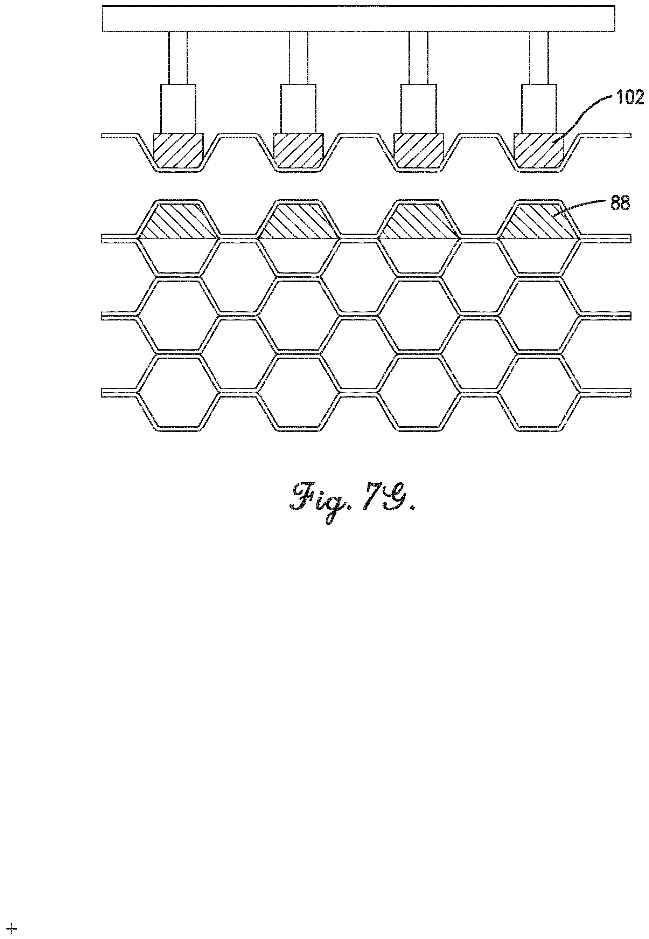

Turning to FIG. 7A, the thermoplastic welding elements 102 are operable to melt the thermoplastic of the corrugated thermoplastic sheets. The welding elements 102 have bottom surfaces 104 that are generally coplanar and face the top surfaces 92 of the elongated supports 88. In embodiments, the thermoplastic welding elements 102 comprise ultrasonic welding heads, induction welding heads, or hot knives.

The platen 98 is operable to shift towards the elongated supports 88. The thermoplastic welding elements 102 press against upper surfaces 110 of troughs 108 of the corrugated thermoplastic sheet 11 so that at least portions of the lower surfaces 112 of the troughs 108 of the sheet 11 melt and bond to at least portions of the upper surfaces 110 of the crests 106 of the bottom corrugated thermoplastic sheet 10. As used herein, when in the orientation indicated by the arrow, the crests 106 are the portions of the corrugated sheets 10, 11 that are convex relative to and extend toward the platen 98, and the troughs 108 are the portions of the corrugated sheets 10, 11 that are concave relative to and extend away from the platen 98. The upper surfaces 110 are on the sides of the corrugated sheets 10, 11 that face toward the platen 98, and the lower surfaces 112 are on the sides of the corrugated sheets 10, 11 that faces away from the platen 98.

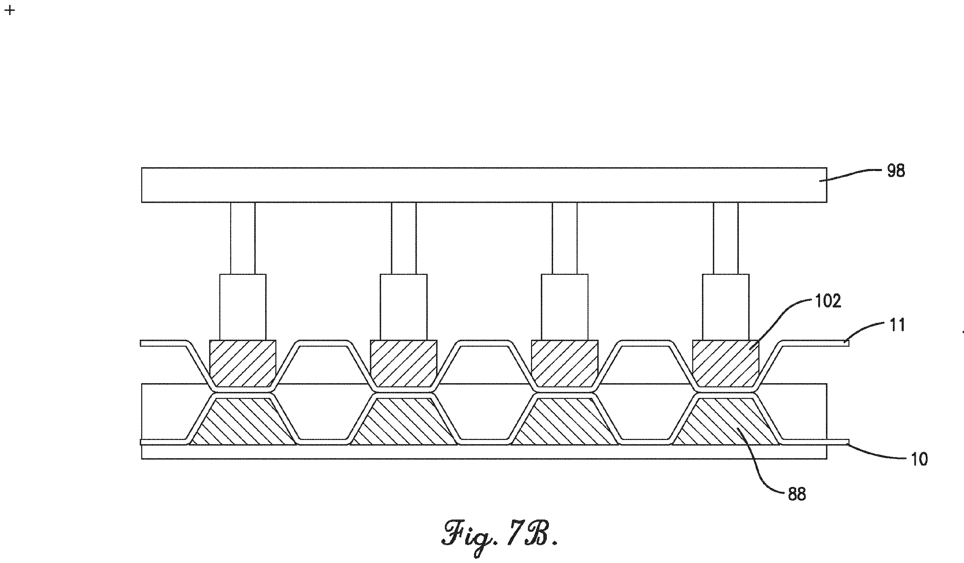

Turning to FIG. 7B, the platen 98 is actuated to hold the thermoplastic welding elements 102 pressed against the corrugated sheet 11 so that the welding elements 102 and the elongated support elements 88 squeeze the sheets 10, 11. The sheets 10, 11 are held clamped under pressure until they are welded together and then until their temperatures drop below the melting temperature of the thermoplastic of the sheets 10, 11. In embodiments, the welding elements 102 and the elongated supports 88 squeeze the sheets 10, 11 together until the temperature of the sheets 10, 11 drop below the halfway between the glass transition temperature and the melt temperature of the thermoplastic of the sheets 10, 11 to maximize the crystallinity formation rate in the weld.

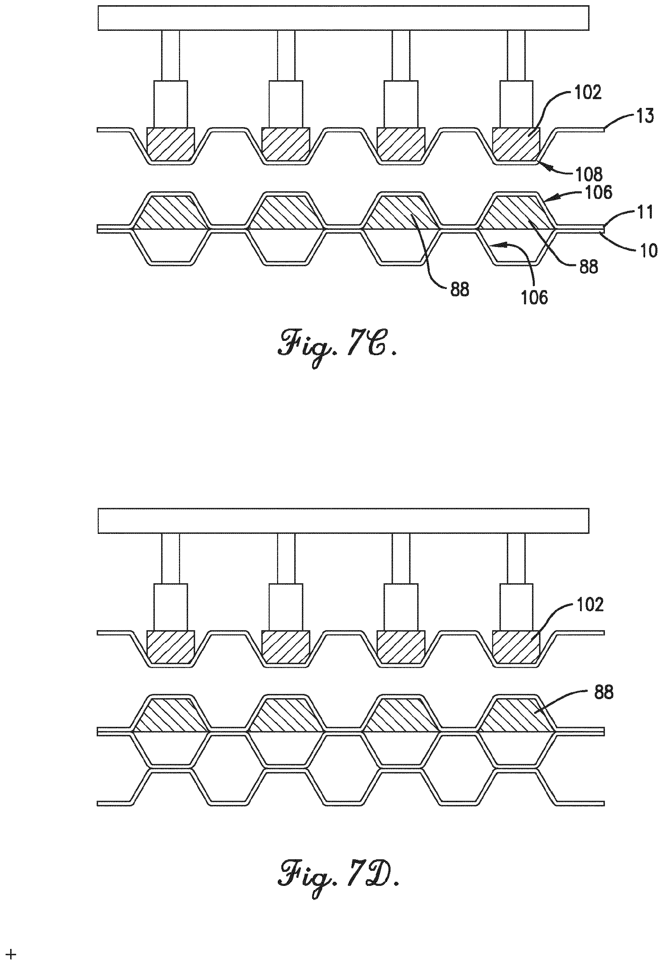

The elongated supports 88 are pulled out of the crests 106 of the sheet 10 and inserted into the spaces defined by the crests 106 of second sheet 11 for welding another sheet 13, as depicted in FIG. 7C. The welding elements 102 are then pressed against the troughs 108 of the third sheet 13 to weld the third sheet 13 to the second sheet 11. These operations are repeated until the cellular structure 14 having the desired number of layers is formed, as depicted in FIGS. 7D-7G.

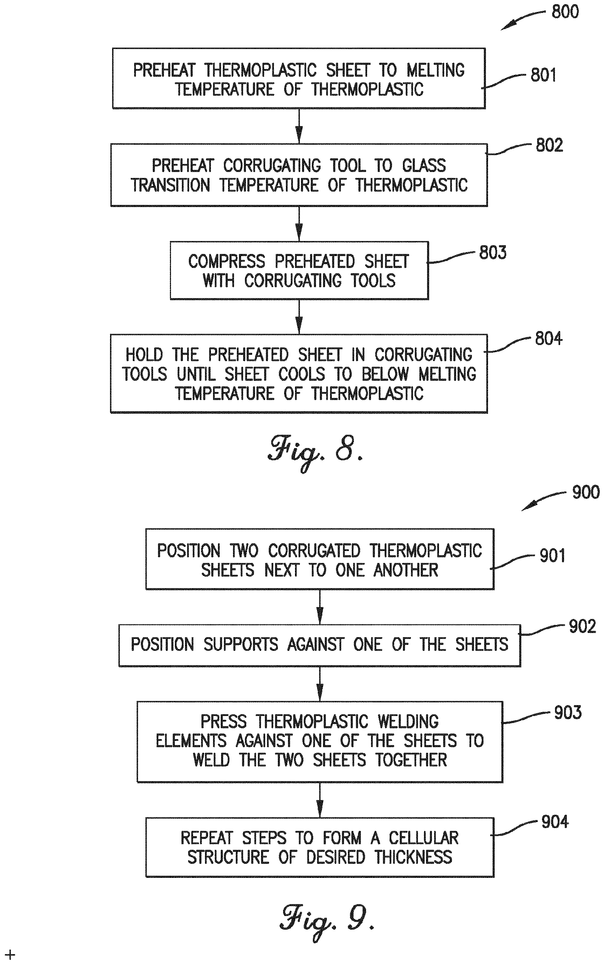

The flow chart of FIG. 8 depicts the steps of an exemplary method 800 of forming a corrugated thermoplastic sheet. In some alternative implementations, the functions noted in the various blocks may occur out of the order depicted in FIG. 8. For example, two blocks shown in succession in FIG. 8 may in fact be executed substantially concurrently, or the blocks may sometimes be executed in the reverse order depending upon the functionality involved. In addition, some steps may be optional. The method 900 is described below, for ease of reference, as being executed by exemplary devices and components introduced with the embodiments illustrated in FIGS. 1-4F.

Referring to step 801, a portion of a sheet comprising thermoplastic and a reinforcement material is preheated to at least about a melting temperature of the thermoplastic. The sheet is heated via a first heating element configured to heat a portion of the sheet to at least about a melting temperature of the thermoplastic. In embodiments, the first heating element comprises a mobile heater configured to extend between corrugating tools to heat the portion of the sheet the tools are about to engage. In some embodiments, the first heating element is located proximal to an inlet of an oven that houses corrugating tools and through which the sheet is operable to enter. In some embodiments, the first heating element includes infrared lamp heaters, hot gas heaters, hot air heaters, or high-powered lasers.

Referring to step 902, at least one of the corrugating tools is preheated to at least about a glass transition temperature of the thermoplastic. In embodiments, the corrugating tool is heated via a second heater configured to heat the tool so that a surface that engages the sheet is at least about the glass transition temperature. In embodiments, the second heating element is configured to heat the thermoplastic material to about halfway through the glass transition temperature of the thermoplastic material and the melting temperature of the thermoplastic material. In embodiments, the second heating element includes a fan for blowing heated air onto the corrugating tool. In embodiments, the second heating element includes electric heaters, infrared heaters, or induction heaters. In some embodiments, this step includes heating both corrugating tools.

Referring to step 803, the preheated portion of the sheet is compressed between the corrugating tools to form a corrugation in the sheet. In embodiments, the corrugating tools comprise continuous track type tools, as discussed above in reference to FIG. 2. Alternatively, the sheet is compressed between linearly actuated tools with cleats, as discussed above in reference to FIGS. 3-4F.

Referring to step 804, the corrugation(s) are held between the tools until the portion of the sheet having the corrugation is at least below the melting temperature of the thermoplastic. In embodiments, the thermoplastic is held stamped down and cooled until the thermoplastic goes below the glass transition temperature of the thermoplastic. In embodiments, this step includes shifting the first and second sets of cleats of the tools with their respective belts a distance with the corrugation held therebetween and disengaging at least one of the tools from the preheated sheet.

The method 900 may include additional, less, or alternate steps and/or device(s), including those discussed elsewhere herein.

The flow chart of FIG. 9 depicts the steps of an exemplary method 900 of forming a cellular structure from corrugated thermoplastic sheets. In some alternative implementations, the functions noted in the various blocks may occur out of the order depicted in FIG. 9. For example, two blocks shown in succession in FIG. 9 may in fact be executed substantially concurrently, or the blocks may sometimes be executed in the reverse order depending upon the functionality involved. In addition, some steps may be optional. The method 900 is described below, for ease of reference, as being executed by exemplary devices and components introduced with the embodiments illustrated in FIGS. 5-7G.

Referring to step 901, an outer surface of a crest of a first corrugated thermoplastic sheet and an outer surface of a trough of a second corrugated thermoplastic sheet are positioned next to one another (as depicted in FIGS. 7A and 7B). In embodiments, multiple crests of the first corrugated thermoplastic sheet are positioned next to multiple troughs of the second corrugated thermoplastic sheet.

Referring to step 902, elongated supports are inserted into crests of the first corrugated sheet. The supports are positioned against inner surfaces of the crests of the first corrugated thermoplastic sheet. In some embodiments, this step includes positioning a tool support against the undersides of the ends of the elongated supports that stick out from the sheet.

Referring to step 903, thermoplastic welding elements are pressed against inner surfaces of the troughs of the second corrugated thermoplastic sheet so that at least portions of the outer surfaces of the troughs of the second corrugated thermoplastic sheet melt and bond to at least portions of the outer surfaces of the crests of the first corrugated thermoplastic sheet. In some embodiments, the thermoplastic welding elements are operable to melt the thermoplastic and have coplanar bottom surfaces that face the top surfaces of the elongated supports. The thermoplastic welding elements and the supports cooperatively squeeze the two corrugated thermoplastic sheets when welding them. The corrugated thermoplastic sheets are held together until they are welded together. Once welded, the corrugated thermoplastic sheets are held together at least until their temperatures drop below the melting temperature of the thermoplastic of the sheets to ensure strong welds. In embodiments, the welding elements and the elongated supports are used to squeeze the sheets together until the temperature of the sheets drop below the glass transition temperature of the thermoplastic of the sheets.

Referring to step 904, one or more of the previous steps are repeated with additional corrugated thermoplastic sheets until a cellular structure with a desired thickness is formed. This step includes positioning outer surfaces of troughs of another corrugated thermoplastic sheet and outer surfaces of crests of the previously-welded corrugated thermoplastic sheet next to one another. This step also includes removing the supports from the spaces defined by the previously-welded crests of the previously-welded sheet and inserting the supports into the spaces defined by the crests of the thermoplastic sheet above the previous one. This step includes pressing the thermoplastic welding elements against inner surfaces of the troughs of the next corrugated thermoplastic sheet so that at least portions of the outer surfaces of the troughs of the next corrugated thermoplastic sheet melt and bond to at least portions of the outer surfaces of the crests of the previously-welded corrugated thermoplastic sheet.

The method 900 may include additional, less, or alternate steps and/or device(s), including those discussed elsewhere herein.

Although the invention has been described with reference to example embodiments illustrated in the attached drawing figures, it is noted that equivalents may be employed and substitutions made herein without departing from the scope of the invention as described and claimed herein.

Having thus described various embodiments of the invention, what is claimed as new and desired to be protected by Letters Patent includes the following:

## Claims

1. A method of forming a corrugated thermoplastic matrix composite sheet, the method comprising:
preheating a thermoplastic matrix composite sheet comprising a thermoplastic matrix and a reinforcement material to at least about a melting temperature of the thermoplastic matrix;
preheating at least one of a pair of complementary corrugating tools to at least about a glass transition temperature of the thermoplastic matrix;
compressing the preheated thermoplastic matrix composite sheet between the pair of complementary corrugating tools to form a corrugation in the thermoplastic matrix composite sheet; and
holding the corrugation between the pair of complementary corrugating tools until a portion of the thermoplastic matrix composite sheet having the corrugation is below the melting temperature of the thermoplastic matrix to form the corrugated thermoplastic matrix composite sheet.

2. The method of Claim 1, wherein the thermoplastic matrix composite sheet comprises an adjacent portion that is proximal to the portion of the thermoplastic matrix composite sheet having the corrugation and that is movably suspended so that the adjacent portion shifts toward the corrugating tools when the preheated thermoplastic matrix composite sheet is formed.

3. The method of Claim 2, wherein the thermoplastic matrix composite sheet is suspended via a clamp that is operable to shift toward the corrugating tools; or wherein the thermoplastic matrix composite sheet is furled into roll and suspended via a rotatable axle.

4. The method of any preceding claim, wherein the complementary corrugating tools
comprise - a first continuous track assembly with a belt having a first set of cleats,
and
a second continuous track assembly with a belt having a second set of cleats that are complementary to the first set of cleats.

5. The method of Claim 4, wherein the holding the corrugation between the pair of complementary corrugating tools includes:
engaging the preheated thermoplastic matrix composite sheet, via the first and second sets of cleats;
shifting the first and second sets of cleats with their respective belts a distance; and
disengaging at least one of the first and second sets of cleats from the preheated thermoplastic matrix composite sheet;
wherein, optionally, the distance is at least twice as long as a length of the portion of the sheet having the corrugation.

6. The method of any preceding claim, wherein the complementary corrugating tools comprise a first die and a shiftable second die, and the compressing the preheated sheet includes: shifting the second die towards the first die with the preheated sheet between the first and second dies;
and optionally wherein the corrugation is a first corrugation, further comprising shifting a third die towards a fourth die adjacent to the first die with the preheated sheet between the third and fourth dies to form a second corrugation adjacent to the first corrugation.

7. The method of any preceding claim, wherein the reinforcement material comprises
continuous fiber; optionally . wherein the reinforcement material comprises at least one of glass fiber, carbon fiber, boron fiber, aramid fiber, or ceramic fiber.

8. An apparatus for forming a corrugated thermoplastic matrix composite sheet from a thermoplastic matrix composite sheet with reinforcement material embedded therein, the apparatus comprising:
a first heating element configured to heat a portion of the sheet to at least about a melting temperature of the thermoplastic;
a first corrugating tool having a male mold for imparting a trough in the sheet;
a second corrugating tool having a complementary female mold that receives the male mold; and
a second heating element configured to heat at least one of the male mold or the female mold to at least about a glass transition temperature of the thermoplastic.

9. The apparatus of Claim 8, wherein the reinforcement material comprises continuous fiber; and further comprising:
a mobile support for supporting a portion of the sheet and spaced apart from the first and
second corrugating tools, the support being configured to shift toward the first and
second corrugating tools; and/or
an axle configured to support a portion of the sheet and allow the portion of the sheet to shift toward the first and second corrugating tools as the pulley rotates.

10. The apparatus of Claim 8 or 9, wherein the first heating element comprises a mobile heater configured to extend between the first corrugating tool and the second corrugating tool to heat the portion of the sheet.

11. The apparatus of any one of claims 8 to 10, further comprising an oven that houses the first and second corrugating tools and comprises an inlet through which the sheet is operable to enter the oven and an outlet through which the sheet is operable to exit the oven, wherein the first heating element is located proximal to the inlet.

12. The apparatus of any one of claims 8 to 11, wherein the first corrugating tool comprises a plurality of individually actuatable male molds, and the second corrugating tool comprises a plurality of female molds operable to receive corresponding male molds.

13. An apparatus for forming a corrugated thermoplastic sheet, the apparatus comprising:
a first continuous track assembly with a belt having a first set of cleats for engaging a first side of a portion of a thermoplastic sheet; and
a second continuous track assembly with a belt having a second set of cleats that are complementary to the first set of cleats for engaging a second side of the portion of the thermoplastic sheet, the second side being opposite to the first side.

14. The apparatus of Claim 13, further comprising -
a first heating element configured to heat the portion of the thermoplastic sheet to at least about a melting temperature of the thermoplastic sheet; and
a second heating element configured to heat at least one of the first set of cleats or the second set of cleats to at least about a glass transition temperature of the thermoplastic sheet.

15. The apparatus of Claim 13 or 14, wherein the first continuous track assembly is positioned relative to the second continuous track assembly so that the first and second sets of cleats engage the portion of the thermoplastic sheet and shift the portion of the thermoplastic sheet when the belts of the first and second continuous track assemblies are shifted.
